# EUROPEAN PATENT SPECIFICATION

(11) **EP 2 749 633 B1**
(45) Date of publication and mention of the grant of the patent: **13.12.2017**
(21) Application number: 12825652.6
(22) Date of filing: 24.08.2012
(51) Int. Cl.: C12C 5/02

(54) **COMPOSITION HAVING IMPROVED Foam STABILITY AND USE THEREOF**
ZUSAMMENSETZUNG MIT VERBESSERTER SchaumSTABILITÄT UND VERWENDUNG DAVON
COMPOSITION AYANT UNE STABILITÉ DE MOUSSE AMÉLIORÉE ET SON UTILISATION

(30) Priority: 25.08.2011 JP 2011184102
(43) Date of publication of application: 02.07.2014
(73) Proprietor: Amano Enzyme Inc., Nagoya-shi, Aichi 460-8630 (JP)
(72) Inventor: IDO Hiroki, Kakamigahara-shi Gifu 509-0109 (JP); OBARA Takakiyo, Kakamigahara-shi Gifu 509-0109 (JP); YAMAGUCHI Shotaro, Kakamigahara-shi Gifu 509-0109 (JP)
(74) Representative: Steinecke, Peter
(86) International application number: PCT/JP2012/071375
(87) International publication number: WO 2013/027813

(56) References cited:
- EP-A1- 1 914 298
- EP-A1- 2 191 731
- JP-A- H0 723 740
- JP-A- H1 075 716
- JP-A- H1 075 716
- JP-A- S6 427 471
- JP-A- H04 126 039
- JP-A- H04 126 039
- AKIO KATO ET AL: "Improvement of Plant Proteins by the Reconstitution of Peptides", DAIZU TANAPAKUSHITSU KENKYUKAI KAISHA - REPORT OF THE SOY PROTEINRESEARCH COMMITTEE, DAIZU TANPAKUSHITSU KENKYUKAI, OSAKA, JP, vol. 18, 1 December 1997 (1997-12-01), pages 49-54, XP008172900, ISSN: 0919-9535
- Elfadil Elfadl Babiker: "E?ect of transglutaminase treatment on the functional properties of native and chymotrypsin-digested soy protein", Food Chemistry, 1 January 2000 (2000-01-01), pages 139-145, XP055188842, Retrieved from the Internet: URL:http://www.soiaefrutta.com/wp-content/ uploads/2013/06/A.3.14-Transglutaminase-ch ymotrypsin-digested-SP.pdf [retrieved on 2015-05-12]
- EL FADIL E. BABIKER ET AL: "Improvement in the Functional Properties of Gluten by Protease Digestion or Acid Hydrolysis followed by Microbial Transglutaminase Treatment", JOURNAL OF AGRICULTURAL AND FOOD CHEMISTRY, vol. 44, no. 12, 1 January 1996 (1996-01-01), pages 3746-3750, XP055188844, ISSN: 0021-8561, DOI: 10.1021/jf960302d
- EIKO WADA ET AL: "Enzymatic modification of Î2-lactoglobulin with N-fatty-acyl-dipeptide by transglutaminase from Streptomyces mobaraense", BIOTECHNOLOGY LETTERS, vol. 23, no. 17, 1 January 2001 (2001-01-01), pages 1367-1372, XP055147182, ISSN: 0141-5492, DOI: 10.1023/A:1011699921628
- CHOBERT J M ET AL: "Recent advances in enzymatic modifications of food proteins for improving their functional properties", NAHRUNG - FOOD, VCH VERLAGSGESELLSCHAFT, WEINHEIM, XX, vol. 40, no. 4, 1 January 1996 (1996-01-01), pages 177-182, XP009108914, ISSN: 0027-769X, DOI: 10.1002/FOOD.19960400403
- AKIO KATO ET AL.: 'Improvement of Plant Proteins by the Reconstitution of Peptides' REPORT OF THE SOY PROTEIN RESEARCH COMMITTEE (JAPAN) vol. 18, December 1997, pages 49 - 54, XP008172900

## Description

### TECHNICAL FIELD

The present invention relates to a composition effective for improving the foam stability of sparkling beverages or foods, and the use thereof. The present application claims priority to and the benefit of Japanese Priority Patent Application JP 2011-184102 filed August 25, 2011.

### BACKGROUND ART

As a beverage alternative to beer, various beer-like beverages such as low-malt beer having a lowered malt utilization rate and a beer-flavored sparkling alcoholic beverage (generally referred to as "the third beer") manufactured from a raw material and by a process, which are different from those of beer and low-malt beer, are sold by many companies. In addition, a beer-flavored non-alcoholic beverage is also sold by many companies in recent years. The foam formed when beer, a beer-like beverage, and a beer-flavored non-alcoholic beverage (for the convenience of explanation, these are collectively referred to as a "beer-based sparkling beverage") are poured is one of important features thereof, and in general, it is desired that the foam is retained over a long period of time, that is, foam stability (foam retention) is high. In order to increase the foam stability of a beer-based sparkling beverage, various attempts, such as the addition of a polysaccharide with thickening property (Patent Documents 1 to 3) and the addition of soluble fraction of yeast cell wall (Patent Document 4), have been disclosed. However, the needs for the technique for improving foam stability are still high. In the third beer, since the component derived from malt contributing to the formation of foam is not present, or the amount is little even if present, the foam stability thereof deteriorates compared to beer or low-malt beer, and thus, the improvement in foam stability thereof is particularly earnestly desired. On the other hand, the foam stability is an important factor to determine the qualities of not only a beer-based sparkling beverage but also other sparkling beverages or foods.

Meanwhile, the publication (Patent Document 5) mentioned in the use of the enzyme (transglutaminase) used in the invention is represented in the following citation list.

### PRIOR ART DOCUMENT

### PATENT DOCUMENT

Patent Document 1: JP 4-228060 A
Patent Document 2: US 4,720,389
Patent Document 3: US 4,729,900
Patent Document 4: JP 2008-271820 A
Patent Document 5: JP 3616697 B1
Patent Document 6: EP 2 191 731 A1

### SUMMARY OF THE INVENTION

### PROBLEM TO BE SOLVED BY THE INVENTION

An object of the invention is to provide a composition effective for improving the foam stability of a beer-based sparkling beverage and the use thereof.

### MEANS FOR SOLVING PROBLEM

The inventors have aimed at the creation of a technique that brings about improvement in foam stability, and have conducted investigations using soy protein and pea protein used as a raw material of the third beer. Specifically, these proteins were treated with a protease and a transglutaminase, and thus the effect thereof was investigated. As a result, surprisingly, the solution obtained after reacting with the enzymes exhibited high foam stability. In other words, the inventors found that the product of proteolysis (protein or polypeptide), which is effective for improving foam stability, is produced when a protease and a transglutaminase are used simultaneously to treat a protein material. For example, if the third beer is manufactured using the product of proteolysis as a raw material, a product having improved foam stability may be obtained since the product of proteolysis remains in the product.

Here, it is known that the foaming property of a protein material generally decreases when protein is decomposed to be low molecular peptides and amino acids (for example, see P.M. Nielson, Functionality of Protein Hydrolysates, FOOD PROTEINS AND THEIR APPLICATIONS (15) pp. 443 to 471). When taking this knowledge into consideration, it is predicted that the foaming property and foam stability would be better in case of solely using a transglutaminase than in case of using a protease and a transglutaminase in combination. However, the above described fact that is demonstrated by the investigations of the inventors is contrary to this prediction, and thus it can be said that it is a surprising finding.

As described above, by the intensive investigations of the inventors, it was found that a product of proteolysis, which is effective for improving foam stability, is produced when a protease and a transglutaminase are used simultaneously to treat a protein material. The product of proteolysis is highly expected to be used as a general foam stabilizer. In other words, it is highly expected to be applied to various kinds of sparkling beverages and foods as well as the third beer. The invention to be listed below will be based on the result and research finding described above.
[1] Use of a composition having improved foam stability in the manufacture of a beer-based sparkling beverage comprising a protein or a polypeptide produced by using a protease and a transglutaminase simultaneously to treat a protein material, wherein the amount of the protease is 0.1% to 10% by weight (w/w) with respect to the protein material, the amount of the transglutaminase is 0.01% to 10% by weight (w/w) with respect to the protein material, and the reaction temperature is 20°C to 60°C.
[2] The use according to [1], in which the protein material is a raw material of beverages.
[3] The use according to [1] or [2], in which the protein material is one or two or more of proteins selected from the group consisting of wheat protein, barley protein, soy protein, corn protein, pea protein, rice protein, milk protein, and fish protein.
[4] The use according to any one of [1] to [3], in which the transglutaminase is derived from Streptomyces.
[5] The use according to any one of [1] to [4], in which the beer-based sparkling beverage is a beer-based sparkling beverage not using malt as a raw material.
[6] A method for manufacturing a beer-based sparkling beverage, the method comprising using the composition according to any one of [1] to [4] as at least part of a raw material and further comprising the following steps (1) to (4):
   (1) a step of preparing the composition by using a protease and a transglutaminase simultaneously to treat a protein material or by using a transglutaminase to treat a product of proteolysis, or a step of preparing the composition prepared in advance, wherein the amount of the protease is 0.1% to 10% by weight (w/w) with respect to the protein material, the amount of the transglutaminase is 0.01% to 10% by weight (w/w) with respect to the protein material, and the reaction temperature is 20°C to 60°C;
   (2) a step of mixing the composition produced or prepared in step (1) with sugar syrup, hops, and water, and boiling a mixture thereof;
   (3) a step of adding beer yeast to liquid before fermentation obtained in step (2), and fermenting the liquid; and
   (4) a step of storing and aging fermented liquid obtained in step (3).

### BRIEF DESCRIPTION OF THE DRAWINGS

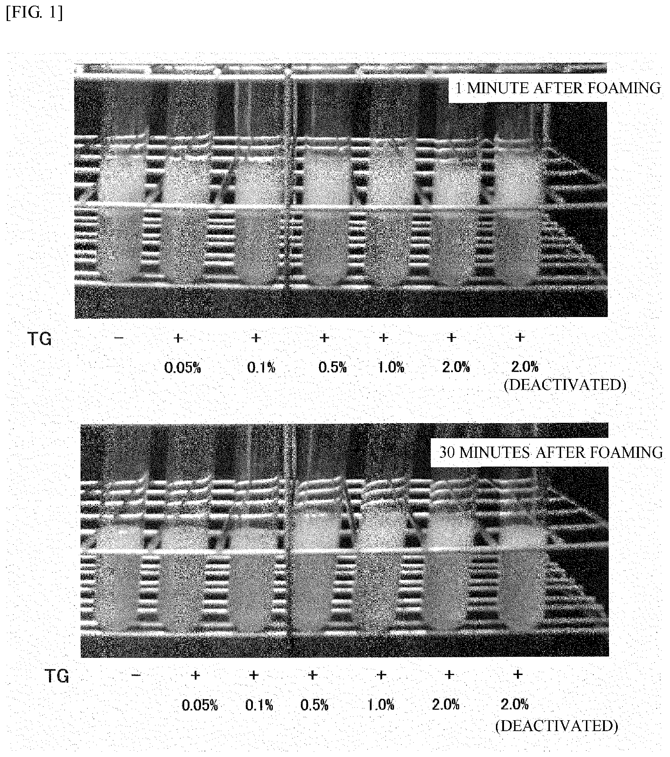

Fig. 1 is a result of a foaming test using soy protein. The states of foams of the reaction solutions in one minute after foaming (top) and in thirty minutes after foaming (bottom) are illustrated (in case of using protease A as a protease). TG:: transglutaminase, +: addition, -: non-addition.

### BEST MODE(S) FOR CARRYING OUT THE INVENTION

### 1. Composition having improved foam stability and the production method thereof

The first aspect of the invention relates to the use of a composition having improved foam stability in the manufacture of a beer-based sparkling beverage. In the present specification, the term the "composition having improved foam stability" means the characteristic component of the invention, that is, a composition of which the foam stability is high due to the action and effect of a protein or a polypeptide produced by using a protease and a transglutaminase to treat a protein material, and which increases the foam stability of a sparkling beverage when used as at least part of a raw material or added during the manufacturing process of the sparkling beverage.

The composition for use in accordance with the invention is used for improving the foam stability of a sparkling beverage. The examples of the sparkling beverage to which the composition is applicable may include a beer-based sparkling beverage (beer, low-malt beer, the third beer, and a beer-flavored non-alcoholic beverage) and a carbonated beverage (alcohol-containing or non-alcoholic) (the detail of the use will be described below). The composition is particularly effective for improving the foam stability of the so-called "third beer". In Japan, the third beer is classified broadly into one, which is brewed without using malt as a raw material, and the other, which is obtained by mixing low-malt beer with another alcoholic beverage (a representative is barley spirits). Under current Liquor Tax Law, the former is classified into other brews (effervescent) (1), and the latter is classified into liquor (effervescent) (1).

The composition contains a protein or a polypeptide produced by using a protease and a transglutaminase to treat a protein material. Here, the protein material is not particularly limited, but is preferably, a protein material which is a raw material of foods or beverages. The specific examples thereof may include wheat protein, barley protein, soy protein, corn protein, pea protein, rice protein, milk protein, and fish protein. The protein material is preferably wheat protein, barley protein, soy protein, corn protein, pea protein, and rice protein. These protein materials may be prepared according to a common technique or a commercially available product may be used. For example, pea protein may be purchased from ORGANO CORPORATION (for example, product name: PP-CS), ROQUETTE JAPAN K. K. (for example, NUTRALYS), or the like. In the same manner, soy protein may be purchased from FUJI OIL CO., LTD (for example, product name: FUJIPRO F), The Nisshin Oillio Group, Ltd. (for example, product name: Solpea 4000), DAIICHI-KASEI CO., LTD. (for example, product name: Protein GP), or the like. Two or more kinds of protein materials may be used in combination. In that case, for example, the protein or the polypeptide constituting the composition is obtained by using an enzyme to treat a mixture of two or more kinds of protein materials. On the other hand, the composition may be produced by using an enzyme to treat each of the protein materials to be used in combination, and then by mixing the protein or the polypeptide thus obtained.

The examples of the protease may include Biosoku, Newlase F3-G, Newlase A, Protease A "Amano" G, Protease A "Amano" SD, Protease N "Amano" G, Protease S "Amano" G, ProteAX, ProteAX G, Papain W-40, Promerain F, PROTIN NY10, PROTIN PC10, PROTIN AY, PROTIN SD-NY10, PROTIN SD-PC10F, THERMOASE PC10F, PROTIN SD-AC10F, PROTIN SD-AY10, PROLESAR FG-F, Protease P "Amano" 3G, Protease M "Amano" G, and Protease M "Amano" SD (these are manufactured by Amano Enzyme Inc.), Molsin F (manufactured by Kikkoman Corporation), Sumizyme AP, Sumizyme LP, Sumizyme LP500, Sumizyme FP, Sumizyme LPL, and Sumizyme MP (these are manufactured by Shin Nihon Chemical Co., Ltd), Denapushin 2P, Denachimu AP, Biopuraze OP, Biopuraze AL-15FG, Biopuraze 30G, Biopuraze APL-30, Biopuraze OR-10G, Biopuraze 30L, Biopuraze XL-416F, Biopuraze SP-20FG, Biopuraze SP-4FG, and Protease CL-15 (these are manufactured by Nagase ChemteX Corporation), Orientase 20A, Tetorase S, Nukureishin, Orientase 10NL, Orientase 90N, Orientase ONS, and Orientase 22BF (these are manufactured by HBI Enzymes Inc.), Brewers Clarex, Baridase AFP, Baridase FP60, Brewers Protease, Accelerzyme NP50.000, Delvorase, Baridase TSP200, Bakezyme PPU95.000, Bakezyme B500, Colpurin, Baridase Papain SF, and Baridase Bromerain (these are manufactured by DSM Japan), PROTEASE YP-SS, PANCIDASE NP-2, PANCIDASE P, AROASE AP-10, AROASE NP-10, AROASE NS, AROASE XA-10, and PROTEASE AL (these are manufactured by Yakult Pharmaceutical Industry Co., Ltd.), Puromoddo 223LP, Protex 7L, Protex 14L, Alkaline Protease GL, Protex 6L, Protex 89L, Pyurafekuto, Pyurafekuto OX, Puroperaze, Protex OXG, and Protex 40L (these are manufactured by Genencor Kyowa), PTN, Neutrase, Esperase, Savinase, Alcalase, Clearlens Pro, Everlase, Kannase, Porazyme, Flavourzyme, Protamex, and Noboran (these are manufactured by Novozymes Japan), PAPAIN F, TRYPSIN 4.0T, COROLASE N, VERON L10, COROLASE L10, COROLASE 7089, and VERON W (these are manufactured by HIGUCHI INC.), ENZYLON NBS, ENZYLON SA, and MAGNAKS MT (these are manufactured by RAKUTO KASEI INDUSTRIAL CO., LTD), KOKULASE P (manufactured by Mitsubishi-Kagaku Foods Corporation), Actinase AS and Actinase AF (these are manufactured by Kaken Pharma Co., Ltd.), Grindamyl PR59 and Grindamyl PR43 (these are manufactured by Danisco Japan Ltd.), Softagen M2 (manufactured by TAISHO TECHNOS CO., LTD.), Proteinase K (manufactured by Wako Pure Chemical Industries Ltd.), Deskin C (manufactured by Daiwa Kasei K.K.), and the like.

As the transglutaminase, a product produced by a microorganism such as Streptomyces (for example, see JP 64-27471 A), a product produced by a mammal (for example, see JP 1-50382 B), a recombinant one obtained using recombinant DNA technology (for example, JP 5-199883 A and JP 2004-97099 A), and the like may be used. A transglutaminase produced by Streptomyces is preferably used. A stabilized type transglutaminase such as one disclosed in WO 2009/101762 may also be used.

Hereinafter, the method for producing the composition for use in accordance with the invention will be described, and with regard to matters that will not be particularly mentioned, the description corresponding to the matters among the above descriptions on the composition will be adopted.

The composition may be produced by a method including the following step: (1) a step of treating a protein material with a protease and a transglutaminase. In this step (1), two enzymes (protease and transglutaminase) are allowed to act with respect to a protein material, as defined in the claims. These two enzymes are allowed to act simultaneously. By allowing them to act simultaneously, a decomposition reaction and a crosslinking reaction are efficiently performed, an effect that a further complicated crosslinked complex is produced may be expected to occur. The term "allowing them to act simultaneously" as used herein, means that a state, in which an enzyme reaction by a protease and an enzyme reaction by a transglutaminase proceed simultaneously, is caused. For example, if both of the enzymes are added and allowed to act at the same time with respect to a protein material (in case of a solid material, a material suspended or dissolved in a solvent such as water), or if one enzyme is added and allowed to act with respect to a protein material when the other enzyme is acting with respect to the protein material, a state in which two enzyme reactions are performed simultaneously may be constituted. Meanwhile, as indicated in Examples to be described below, it is confirmed that when a protease and a transglutaminase are allowed to act simultaneously, the excellent effect of foam stability is exhibited.

The reaction conditions are as follows. The amount of the protease used is 0.1% by weight (w/w) to 10% by weight (w/w) with respect to the protein material, the amount of the transglutaminase used is 0.01% by weight (w/w) to 10% by weight (w/w) and preferably 0.1% by weight (w/w) to 2% by weight (w/w), and the reaction temperature is 20°C to 60°C and preferably 30°C to 50°C. The reaction pH is, for example, pH 4 to pH 9, and the reaction time is, for example, 15 minutes to 10 hours and preferably 30 minutes to 10 hours. Meanwhile, the optimum reaction conditions may be determined through a preliminary experiment based on the test system indicated in Examples to be described below.

### 2. Use of composition having improved foam stability

### (1) Manufacture of beer-based sparkling beverage

The second aspect of the invention relates to the use of the composition as defined above. As one of suitable uses, a method for manufacturing a beer-based sparkling beverage is provided. In the method for manufacturing the beer-based sparkling beverage, the composition is used as at least part of the raw material. As a result thereof, the protein or the peptide, which is an active component in the composition and brings about the improvement in foam stability, remains in the finished product, and thus a beer-based sparkling beverage excellent in foam stability is obtained. The manufacturing method of the invention is particularly effective for the manufacture of the third beer (other brews (effervescent) (1)), which is brewed without using malt as a raw material. Hereinafter, the manufacturing method of the invention will be described in detail by taking the case where the method is applied to the third beer (other brews (effervescent) (1)) as an example.

First, the composition for use in accordance with the invention is prepared by using a protease and a transglutaminase to treat a protein material (step (1)). Otherwise, the same composition prepared in advance is prepared (another embodiment of step (1)). Next, the composition produced or prepared in step (1) is mixed with sugar syrup, hops, and water, and boiled (step (2)). Sugar syrup is a material to supply carbon source necessary for the fermentation by yeast, and is, for example, maltose syrup, high maltose syrup, glucose syrup, saccharified liquid of starch, and the like. As a material, which may be mixed with the composition, other than the sugar syrup, hops, and water, caramel color, safflower color, flavoring, and the like may be exemplified.

After the liquid before fermentation obtained in step (2) is cooled, beer yeast is added thereto, and fermentation is performed (step (3)). The fermented liquid thus obtained is stored and aged (step (4)). Thereafter, according to the necessity, the fermented liquid is filtered and filled in a container to produce a product.

In the example above, the step for producing or preparing the composition is provided as a separate process, but the embodiment is not limited thereto. For example, if a protein material is mixed with sugar syrup and the like, and then a protease and a transglutaminase are allowed to act thereon, a component corresponding to an active component of the composition of the invention is produced in the process of manufacture, and thus the step for preparing the composition is not necessary to be provided as a separate process.

In a case where the manufacturing method of the invention is applied to the manufacture of beer or low-malt beer, the composition may be used as one of the auxiliary raw materials, or may be added during the process of manufacture. The time for addition is not particularly limited, but the composition may be added in a stage between after the preparation process and before the fermentation process. On the other hand, the composition prepared in advance is not used, but a component corresponding to an active component of the composition may be produced in the process of manufacture. For example, the component may be produced by using a transglutaminase to treat the wort obtained in the saccharification process. When the transglutaminase is used, a protease may also be used in combination. Meanwhile, using the low-malt beer thus manufactured as a raw material, the third beer (liquor (effervescent) (1)) excellent in foam stability may also be manufactured.

The foam stability of the beer-based sparkling beverage manufactured according to the manufacturing method of the invention may be evaluated, for example, by a NIBEM method. The NIBEM method is described in Analytica-EBC published by EBC (European Brewery Convention), and is generally used in the field of beer.

### EXAMPLES

### 1. Improvement in foam stability by component derived from soy protein

In 50 mL of purified water, 1.5 g of soy protein (FUJIPRO F manufactured by FUJI OIL CO., LTD) was suspended, and then a protease (Protease A "Amano" SD manufactured by Amano Enzyme Inc.) was added thereto at 2% (w/w) per a raw material. A transglutaminase (ACTIVA TG manufactured by AJINOMOTO CO., INC.) was immediately added thereto at 0.05% to 2.0% per raw material, and the resultant was left to stand for 3 hours at 45°C while being stirred. At the same time, in order to confirm whether the protein of the transglutaminase itself was involved in the foam stability, a test sample, in which a transglutaminase solution deactivated in advance by treating for 10 minutes in a boiling water bath was added, was also provided. Meanwhile, the origin and properties of the enzymes used are indicated in Table 1.

**[Table 1]**

| | Protease A "Amano" SD | ProteAX G | Protease M "Amano" G | Transglutaminase |
|---|---|---|---|---|
| Origin | *Aspergillus oryzae* | *Aspergillus oryzae* | *Aspergillus oryzae* | *Streptomyces mobaraensis* |
| Acidic protease | ▲ | ▲ | ⊚ | Contaminating protease is not practically present |
| Neutral protease | Δ | Δ | ○ | |
| Basic protease | ⊚ | ⊚ | ▲ | |
| Contaminating enzyme | - | β-Glucanase | β-Glucanase | α-Amylase β-Amylase |

| | | | | |
|---|---|---|---|---|
| * The strength of activity: in order of ⊚ > ○ > Δ > ▲ | | | | |

After 3 hours of reaction, the resultant was heated in a boiling water bath for 10 minutes and then cooled in flowing water. After cooling, the reaction liquid was diluted 10 times with purified water and 4 mL of the diluted solution was introduced into a test tube, and subjected to the foaming test. In the foaming test, foaming was performed such that the top of the test tube was covered with Parafilm and shaken up and down predetermined times. The time dependent height of the foam was measured from 1 minute after foaming to 30 minutes after foaming. In addition, the same tests were performed using ProteAX G (Amano Enzyme Inc.) and Protease M "Amano" G (Amano Enzyme Inc.) instead of Protease A "Amano" SD.

The results of foaming test are illustrated in Fig. 1 and Table 2. Fig. 1 indicates the state of foam in 1 minute after foaming (top) and the state of foam in 30 minutes after foaming (down).

**[Table 2]**

| | Addition amount of transglutaminase | Height of foam (cm) | | Remaining foam ratio (%) |
|---|---|---|---|---|
| | | After 1 min. | After 30 min. | |
| Protease A "Amano" SD | Not added | 1.6 | 0.6 | 38 |
| | 0.05% | 1.5 | 0.6 | 40 |
| | 0.10% | 1.4 | 0.5 | 36 |
| | 0.50% | 1.6 | 1.2 | 75 |
| | 1.00% | 1.7 | 1.3 | 76 |
| | 2.00% | 1.4 | 1.1 | 79 |
| | 2.0% (DEACTIVATE) | 1.4 | 0.6 | 43 |
| ProteAX G | Not added | 1.9 | 1.2 | 63 |
| | 0.05% | 1.8 | 1 | 56 |
| | 0.10% | 1.9 | 1.3 | 68 |
| | 0.50% | 1.8 | 1.5 | 83 |
| | 1.00% | 1.6 | 1.3 | 81 |
| | 2.00% | 1.7 | 1.4 | 82 |
| | 2.0% (DEACTIVATE) | 1.6 | 0.9 | 56 |
| Protease M "Amano" G | Not added | 1.8 | 0.8 | 44 |
| | 0.05% | 2 | 1.1 | 55 |
| | 0.10% | 1.8 | 1.4 | 78 |
| | 0.50% | 1.8 | 1.4 | 78 |
| | 1.00% | 1.6 | 1.1 | 69 |
| | 2.00% | 1.4 | 1 | 71 |
| | 2.0% (DEACTIVATE) | 1.7 | 0.5 | 29 |

As can be clearly seen from Fig. 1 and Table 2, it is verified that the addition of a transglutaminase improves foam stability concentration-dependently. From the fact that the effect of foam stability is not exhibited in the addition of a deactivated transglutaminase, it can be said that the enzyme reaction by a transglutaminase is involved in foam stability. The enzyme reaction by a transglutaminase causes a glutamine residue and a lysine residue in a protein to bond with each other by an acyl transfer reaction. It is considered that the protein or the polypeptide synthesized by this reaction is involved in the improvement in foam stability.

### 2. Improvement in foam stability by component derived from pea protein

In 50 mL of purified water, 1.5 g of pea protein (PP-CS manufactured by ORGANO CORPORATION) was suspended, and then a protease (Protease M "Amano" G manufactured by Amano Enzyme Inc.) was added thereto at 2% (w/w) per raw material. A transglutaminase (ACTIVA TG manufactured by AJINOMOTO CO., INC.) was immediately added thereto at 0.05% to 2.0% per a raw material, and the resultant was left to stand for 30 minutes at 45°C while being stirred. At the same time, in order to confirm whether the protein of the transglutaminase itself was involved in the foam stability, a test sample, in which a transglutaminase solution deactivated in advance by treating for 10 minutes in a boiling water bath was added, was also provided.

After 30 minutes of reaction, the resultant was heated in a boiling water bath for 10 minutes and then cooled in flowing water. After cooling, the reaction liquid was diluted 2 times with purified water and 4 mL of the diluted solution was introduced into a test tube, and subjected to the foaming test. In the foaming test, foaming was performed such that the top of the test tube was covered with Parafilm and shaken up and down predetermined times. The time dependent height of the foam was measured from 1 minute after foaming to 5 minutes after foaming.

The results of foaming test are indicated in Table 3.

**[Table 3]**

| | Addition amount of transglutaminase | Height of foam (cm) | | Remaining foam ratio % |
|---|---|---|---|---|
| | | Immediately after | After 30 min. | |
| Protease M "Amano" G | Not added | 2.3 | 0.2 | 9 |
| | 0.05% | 2.4 | 0.2 | 8 |
| | 0.10% | 2.1 | 0.2 | 10 |
| | 0.50% | 2 | 0.5 | 25 |
| | 1.00% | 1.6 | 0.8 | 50 |
| | 2.00% | 1.4 | 0.4 | 29 |
| | 2.0% (deactivated) | 2.3 | 0.2 | 9 |

As can be clearly seen from Table 3, it is verified that by the addition of a transglutaminase, foam stability improved while foamability decreases concentration-dependently. From the fact that the effect of foam stability is not exhibited in the addition of a deactivated transglutaminase, it can be said that the enzyme reaction by a transglutaminase is involved in foam stability.

### INDUSTRIAL APPLICABILITY

The composition for use in accordance with the invention is applicable to various kinds of beverages, to which the improvement in foam stability is desired. For example, the invention may be used for the improvement in foam stability of a beer-based sparkling beverage (especially, the third beer), a carbonated beverage (alcohol-containing or non-alcoholic).

## Claims

1. Use of a composition having improved foam stability in the manufacture of a beer-based sparkling beverage, the composition comprising a protein or a polypeptide produced by using a protease and a transglutaminase simultaneously to treat a protein material, wherein the amount of the protease is 0.1 % to 10 % by weight (w/w) with respect to the protein material, the amount of the transglutaminase is 0.01 % to 10 % by weight (w/w) with respect to the protein material, and the reaction temperature is 20°C to 60°C.

2. The use according to claim 1, wherein the protein material is a raw material of beverages.

3. The use according to claim 1 or 2, wherein the protein material is one or two or more of proteins selected from the group consisting of wheat protein, barley protein, soy protein, corn protein, pea protein, rice protein, milk protein, and fish protein.

4. The use according to any one of claims 1 to 3, wherein the transglutaminase is derived from Streptomyces.

5. The use according to any one of claims 1 to 4, wherein the beer-based sparkling beverage is a beer-based sparkling beverage not using malt as a raw material.

6. A method for manufacturing a beer-based sparkling beverage, comprising using the composition as defined in any one of claims 1 to 4 as at least part of a raw material and further comprising the following steps (1) to (4):
(1) a step of preparing the composition by using a protease and a transglutaminase simultaneously to treat a protein material wherein the amount of the protease is 0.1 % to 10 % by weight (w/w) with respect to the protein material, the amount of the transglutaminase is 0.01 % to 10 % by weight (w/w) with respect to the protein material, and the reaction temperature is 20°C to 60°C;
(2) a step of mixing the composition produced or prepared in step (1) with sugar syrup, hops, and water, and boiling a mixture thereof;
(3) a step of adding beer yeast to liquid before fermentation obtained in step (2), and fermenting the liquid; and
(4) a step of storing and aging fermented liquid obtained in step (3).

## Patentansprüche

1. Verwendung einer Zusammensetzung mit verbesserter Schaumstabilität in der Herstellung eines Bier-basierten prickelnden Getränkes, die Zusammensetzung umfassend ein Protein oder ein Polypeptid hergestellt durch gleichzeitige Verwendung einer Protease und einer Transglutaminase, um ein Proteinmaterial zu behandeln, wobei die Menge der Protease 0,1% bis 10% nach Gewicht (w/w) in Bezug auf das Proteinmaterial beträgt, die Menge der Transglutaminase 0,01% bis 10% nach Gewicht (w/w) in Bezug auf das Proteinmaterial beträgt, und die Reaktionstemperatur 20°C bis 60°C ist.

2. Verwendung nach Anspruch 1, wobei das Proteinmaterial ein Rohmaterial von Getränken ist.

3. Verwendung nach Anspruch 1 oder 2, wobei das Proteinmaterial ein oder zwei oder mehr von Proteinen ist ausgewählt aus der Gruppe bestehend aus Weizenprotein, Gerstenprotein, Sojaprotein, Maisprotein, Erbsenprotein, Reisprotein, Milchprotein und Fischprotein.

4. Verwendung nach einem der Ansprüche von 1 bis 3, wobei die Transglutaminase aus Streptomyces stammt.

5. Verwendung nach einem der Ansprüche 1 bis 4, wobei das Bier-basierte prickelnde Getränk ein Bier-basiertes prickelndes Getränk ist, welches nicht Malz als Rohmaterial verwendet.

6. Verfahren zur Herstellung eines Bier-basierten prickelnden Getränkes umfassend die Verwendung der Zusammensetzung wie in einem der Ansprüche 1 bis 4 definiert mindestens als Teil eines Rohmaterials und zusätzlich umfassend die folgenden Schritte (1) bis (4):
(1) Schritt des Vorbereitens der Zusammensetzung durch gleichzeitige Verwendung einer Protease und einer Transglutaminase, um ein Proteinmaterial zu behandeln, wobei die Menge der Protease 0,1% bis 10% nach Gewicht (w/w) in Bezug auf das Proteinmaterial ist, die Menge der Transglutaminase 0,01% bis 10% nach Gewicht (w/w) in Bezug auf das Proteinmaterial ist, und die Reaktionstemperatur 20°C bis 60°C ist;
(2) Schritt des Mischens der in Schritt (1) hergestellten oder vorbereiteten Zusammensetzung mit Zuckersirup, Hopfen und Wasser, und Kochen einer Mischung davon;
(3) Schritt des Hinzufügens von Bierhefe zu der in Schritt (2) erhaltenen Flüssigkeit vor Fermentation, und Fermentieren der Flüssigkeit; und
(4) Schritt des Lagerns und Ausreifens der in Schritt (3) erhaltenen fermentierten Flüssigkeit.

## Revendications

1. Utilisation d'une composition ayant une stabilité de mousse améliorée dans la production d'une boisson gazeuse à base de bière, la composition comprenant une protéine ou un polypeptide produit en utilisant une protéase et une transglutaminase simultanément pour traiter un matériau protéique, dans laquelle la quantité de protéase est de 0,1 % à 10 % en poids (p/p) par rapport au matériau protéique, la quantité de transglutaminase est de 0,01 % à 10 % en poids (p/p) par rapport au matériau protéique, et la température réactionnelle est de 20 °C à 60 °C.

2. Utilisation selon la revendication 1, dans laquelle le matériau protéique est une matière première de boissons.

3. Utilisation selon la revendication 1 ou la revendication 2, dans laquelle le matériau protéique est une ou deux ou plusieurs protéines choisies dans le groupe consistant en protéine de blé, protéine d'orge, protéine de soja, protéine de maïs, protéine de pois, protéine de riz, protéine de lait et protéine de poisson.

4. Utilisation selon l'une quelconque des revendications 1 à 3, dans laquelle la transglutaminase est dérivée de *Streptomyces.*

5. Utilisation selon l'une quelconque des revendications 1 à 4, dans laquelle la boisson gazeuse à base de bière est une boisson gazeuse à base de bière n'utilisant pas de malt comme matière première.

6. Procédé de production d'une boisson gazeuse à base de bière, comprenant l'utilisation de la composition telle que définie dans l'une quelconque des revendications 1 à 4, en tant qu'au moins une partie d'une matière première et comprenant en outre les étapes (1) à (4) suivantes:
(1) une étape de préparation de la composition en utilisant une protéase et une transglutaminase simultanément pour traiter un matériau protéique, dans lequel la quantité de protéase est de 0,1 % à 10 % en poids (p/p) par rapport au matériau protéique, la quantité de transglutaminase est de 0,01 % à 10 % en poids (p/p) par rapport au matériau protéique, et la température réactionnelle est de 20 °C à 60 °C;
(2) une étape de mélange de la composition produite ou préparée à l'étape (1) avec un sirop de sucre, du houblon et de l'eau, et en portant à ébullition un mélange de ceux-ci;
(3) une étape d'addition de levure de bière au liquide avant la fermentation obtenue à l'étape (2) et la fermentation du liquide; et
(4) une étape de stockage et de vieillissement du liquide fermenté obtenu à l'étape (3).
